# DEMANDE DE BREVET EUROPEEN

(11) **EP 1 495 854 A1**
(43) Date de publication de la demande: **12.01.2005**
(21) Numéro de dépôt: 04300432.4
(22) Date de dépôt: 08.07.2004
(51) Int. Cl.: B29C 49/24, B65D 23/08

(54) **Récipient et procédé de fabrication**

(30) Priorité: 11.07.2003 FR 0308554
(71) Demandeur: L'OREAL, 75008 Paris (FR)
(72) Inventeur: RAMET, Marc, 92600 ASNIERES (FR)
(74) Mandataire: Tanty, François

(57) **Abrégé**

La présente invention concerne un procédé de fabrication d'un récipient destiné à contenir un produit, notamment un produit cosmétique, caractérisé par le fait qu'il comporte les étapes suivantes :
- disposer une préforme (15) au moins partiellement à l'intérieur d'une pièce de revêtement (10) creuse, présentant une surface extérieure fibreuse ou ayant une texture non lisse, cette préforme (15) présentant une ouverture unique,
- déformer en exerçant une pression interne la préforme (15) afin de lui faire épouser sensiblement la forme d'une surface intérieure de la pièce de revêtement (10).

## Description

La présente invention concerne les récipients destinés, entre autres, au conditionnement de produits fluides, notamment pulvérulents, liquides ou gélifiés, et les procédés de fabrication de ces récipients.

La demande de brevet européen EP 1 281 333 décrit un article cosmétique revêtu extérieurement d'un tissu.

La demande internationale WO 97/28944 décrit la fabrication d'un article en matière plastique recouvert d'un tissu, la matière plastique étant injectée sur le tissu.

Il existe un besoin pour améliorer encore l'esthétique des récipients sans pour autant compliquer outre mesure leur fabrication.

La présente invention a ainsi pour objet, selon l'un de ses aspects, un procédé de fabrication d'un récipient destiné à contenir un produit, notamment un produit cosmétique, comportant les étapes suivantes :
- disposer une préforme au moins partiellement à l'intérieur d'une pièce de revêtement, creuse, présentant une surface extérieure fibreuse ou ayant une texture non lisse, cette préforme présentant une ouverture unique,
- déformer en exerçant une pression interne la préforme afin de lui faire épouser sensiblement la forme d'une surface intérieure de la pièce de revêtement.

La préforme peut notamment être déformée par soufflage.

L'invention peut permettre, entre autres, de réaliser un récipient ayant une forme non cylindrique tout en étant recouvert sur toute ou pratiquement toute sa hauteur, notamment jusqu'à la base d'un col, par le revêtement. Le récipient peut comporter par exemple des épaules à la base du col, recouvertes par le revêtement.

Le revêtement peut être retenu mécaniquement sur le récipient par la forme de ce dernier.

La pièce de revêtement peut comporter une ouverture unique, par laquelle la préforme est introduite avant l'opération de soufflage.

La préforme peut être réalisée par injection ou par extrusion. La réalisation de la préforme par injection peut être préférée notamment lorsque le récipient doit être réalisé avec un col fileté ou être pourvu d'un relief permettant l'accrochage d'une pompe ou d'une valve, par exemple.

Dans ce cas, la préforme peut être réalisée avec ce col par injection, et le soufflage est effectué de manière à ne pas modifier la forme du col, ce dernier étant par exemple prisonnier d'un moule lors de l'opération de soufflage.

Dans le cas d'une fabrication de la préforme par extrusion, la préforme peut être pincée pour la fermer à une extrémité avant mise en place dans la pièce de revêtement.

La pièce de revêtement peut être disposée ou non dans un moule avant l'opération de déformation de la préforme, par exemple par soufflage, selon sa nature notamment et la forme que l'on souhaite donner au récipient.

La pièce de revêtement peut comporter l'un des matériaux choisi parmi les suivants : tissé, non-tissé, notamment feutre, cuir ou simili cuir, fourrure ou imitation de fourrure, flocage, papier, métal, cette liste n'étant pas limitative. La pièce de revêtement peut notamment comporter un grillage métallique.

La pièce de revêtement peut contribuer, le cas échéant, à renforcer la résistance mécanique du récipient, notamment dans le cas où celui-ci est destiné à contenir un produit pressurisé.

Le corps du récipient est de préférence réalisé en matière thermoplastique, transparente ou non, notamment en une polyoléfine, par exemple en polyéthylène ou en polypropylène.

En variante, la préforme peut être réalisée en verre, auquel cas la pièce de revêtement est réalisée dans un matériau suffisamment résistant à la chaleur, par exemple un tissu métallique.

La pièce de revêtement peut comporter au moins une couture. En particulier, la pièce de revêtement peut comporter au moins deux, voire au moins trois coutures, afin de réaliser un assemblage, de morceaux de tissus ou d'un autre matériau, reproduisant sensiblement la forme du récipient à réaliser.

En variante, la pièce de revêtement peut être dépourvue de couture et comporter des parties assemblées par collage ou soudage, voire être constituée par la mise en forme d'une feuille unique, cette feuille étant par exemple déformée à chaud.

Le procédé selon l'invention peut comporter en outre l'étape consistant à disposer un insert à l'intérieur de la pièce de revêtement, préalablement au soufflage de la préforme, par exemple un insert destiné à conférer au récipient un fond plat, afin de lui permettre de reposer sur une surface plane.

Cet insert peut être une pièce en matière plastique ou en un autre matériau, notamment métallique, afin de lester le récipient si nécessaire.

Le procédé selon l'invention peut également comporter l'étape consistant à fixer un élément extérieur sur la pièce de revêtement, préalablement au soufflage de la préforme, afin notamment de combler une ouverture de celle-ci. Un tel élément peut constituer par exemple un socle permettant au récipient de reposer sur une surface plane.

Dans les deux cas précités, la préforme vient, lors de l'étape de soufflage, au contact d'une partie au moins de cet insert ou élément extérieur et peut en épouser au moins partiellement la forme.

Comme expliqué plus haut, l'organe de distribution peut être réalisé d'une seule pièce par moulage de matière plastique avec la préforme, notamment par moulage par injection.

L'organe de distribution peut être notamment réduit à un col muni d'un filetage extérieur, permettant de visser une capsule de fermeture du récipient.

Le cas échéant, la capsule de fermeture peut comporter un applicateur qui s'étend à l'intérieur du récipient lorsque ce dernier est fermé.

En variante, l'organe de distribution peut ne pas faire partie de la préforme et être mis en place après soufflage de celle-ci.

L'organe de distribution peut comporter par exemple une pompe, une valve ou un réducteur d'écoulement.

La pièce de revêtement peut présenter diverses formes après soufflage de la préforme et notamment une forme cylindrique, de révolution ou non, par exemple de section transversale sensiblement circulaire, ovale ; elliptique ou polygonale, une forme sensiblement polyédrique, notamment parallélépipédique, cubique ou pyramidale, sphérique ou ovoïde, ou encore une forme piriforme ou réniforme, cette liste n'étant pas limitative.

La paroi du récipient peut être souple ou rigide, et le récipient peut notamment reprendre par élasticité sa forme initiale après que l'utilisateur ait exercé une pression dessus pour distribuer du produit.

La contenance du récipient est par exemple comprise entre 10 et 500 ml.

L'invention a encore pour objet, selon un autre de ses aspects, indépendamment ou en combinaison avec ce qui précède, un récipient destiné à contenir un produit cosmétique, ce récipient pouvant se caractériser par le fait qu'il comporte :
- une paroi intérieure présentant une surface intérieure destinée à venir au contact du produit,
- une pièce de revêtement couvrant au moins une partie de la paroi intérieure, la paroi intérieure étant réalisée par déformation sous l'effet d'une pression interne, notamment par soufflage, d'une préforme engagée au moins partiellement à l'intérieur de la pièce de revêtement,
la surface intérieure de la paroi intérieure comportant au moins un relief dont la forme épouse sensiblement celle d'un relief de la pièce de revêtement.

La pièce de revêtement peut présenter une surface extérieure fibreuse ou avoir une texture non lisse.

La pièce de revêtement peut comporter des ajours à l'intérieur desquels la paroi intérieure s'étend au moins partiellement, notamment des ajours définis par des mailles d'un tissu ou d'un grillage.

La pièce de revêtement peut ne pas avoir été disposée dans un moule lors de l'étape de déformation de la préforme.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de manière schématique, en perspective, un exemple de récipient réalisé conformément à l'invention,
- la figure 2 est une coupe longitudinale, schématique, du récipient de la figure 1,
- la figure 3 représente séparément, de manière schématique et en perspective, la pièce de revêtement et la préforme utilisées pour réaliser le récipient de la figure 1,
- la figure 4 représente le détail IV de la figure 2,
- la figure 5 est une vue analogue à la figure 4, dans le cas d'une variante de mise en oeuvre de l'invention,
- la figure 6 représente, de manière schématique et partielle, en perspective, un moule dans lequel peut être disposé la pièce de revêtement de la figure 3 avant soufflage de la préforme,
- la figure 7 représente, en coupe schématique et partielle, une variante de réalisation du récipient, comportant un insert disposé à l'intérieur de la pièce de revêtement,
- la figure 8 représente, en coupe schématique et partielle, un récipient comportant un élément extérieur fixé sur la pièce de revêtement,
- la figure 9 illustre la possibilité d'utiliser une pièce de revêtement présentant une structure multicouche,
- la figure 10 représente, de manière partielle et schématique, un récipient équipé d'un organe de prélèvement constitué par une pompe ou une valve, et
- la figure 11 représente un exemple de kit constitué par l'association d'un vêtement et d'un récipient comportant une pièce d'habillage réalisée dans le même tissu que le vêtement.

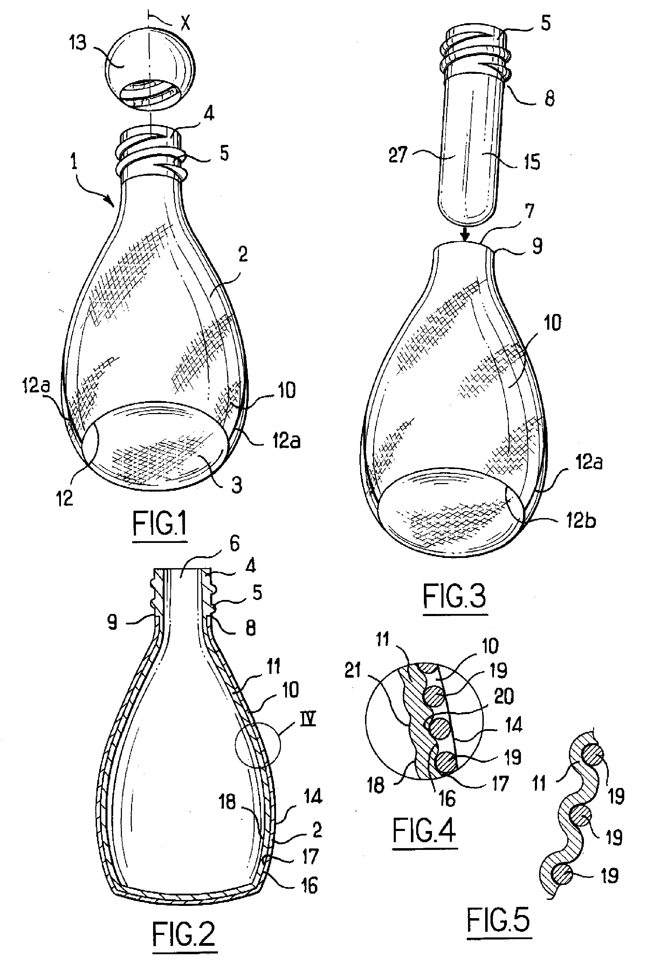

Le récipient 1, représenté aux figures 1 et 2, est destiné à contenir un produit liquide, notamment un produit cosmétique, et comporte un corps 3 allongé selon un axe longitudinal X, généralement piriforme avec un fond 3 aplati.

Le récipient 1 comporte à son extrémité supérieure un organe de distribution 4, constitué dans l'exemple illustré par un col 5 fileté extérieurement, définissant une ouverture 6 unique qui peut être obturée de façon étanche par une capsule de fermeture 13, agencée pour se visser sur le col 5.

Comme on peut le voir plus particulièrement sur la figure 2, le corps 2 comporte extérieurement une pièce de revêtement 10 et intérieurement une paroi intérieure 11, cette dernière épousant la forme de la pièce de revêtement 10, le col 5 étant réalisé d'un seul tenant en matière plastique avec la paroi intérieure 11.

Conformément à un aspect de l'invention, la pièce de revêtement 10 présente une surface extérieure 14 fibreuse ou ayant une texture non lisse.

Le récipient 1 peut être réalisé par exemple de la manière suivante.

La pièce de revêtement 10 est réalisée de façon à épouser sensiblement la forme du récipient 1.

La pièce de revêtement 10 peut notamment être réalisée en assemblant selon des coutures plusieurs morceaux de tissu.

L'un des morceaux peut par exemple s'étendre sur le fond 3 du récipient, et les autres s'étendre entre le fond 3 et l'extrémité supérieure de la pièce de revêtement 10, ces autres morceaux étant assemblés selon des coutures 12a longitudinales et définissant ensemble une ouverture 7 unique, par exemple sensiblement circulaire. Le morceau s'étendant sur le fond 3 du récipient est cousu selon une ligne de couture 12b sensiblement circulaire.

Par ailleurs, une préforme 15 en matière thermoplastique est réalisée par moulage par injection.

Dans l'exemple considéré, cette préforme 15 comporte un corps tubulaire 27 fermé à son extrémité inférieure et se raccordant supérieurement au col 5.

On vient ensuite engager, par l'ouverture 7 de la pièce de revêtement 10, la préforme 15 jusqu'à ce que seul le col 5 émerge de la pièce de revêtement 10. Le diamètre de l'ouverture 7 est par exemple sensiblement égal au diamètre extérieur du col 5, à sa base. Le col 5 présente, dans l'exemple illustré, un épaulement 8 annulaire venant reposer sur le bord 9 de l'ouverture 7.

Le moule utilisé pour réaliser la préforme 15 peut comporter une partie servant au moulage du col 5 qui sert également à le maintenir lors de l'opération de soufflage. En variante, la préforme 15 est entièrement démoulée, après sa réalisation par injection, et transportée par un organe approprié à un poste de soufflage.

Un gaz chaud est injecté à travers l'ouverture 6 à l'intérieur de la préforme 15, de manière à dilater le corps tubulaire 27 encore suffisamment chaud, jusqu'à ce que celui-ci épouse sensiblement la forme de la surface intérieure 16 de la pièce de revêtement 10.

Cette surface intérieure 16 peut comporter, comme on le voit sur la figure 4, une pluralité de reliefs 20, dus dans l'exemple illustré à la présence des fils 19 du tissu dans lequel la pièce de revêtement 10 est réalisée.

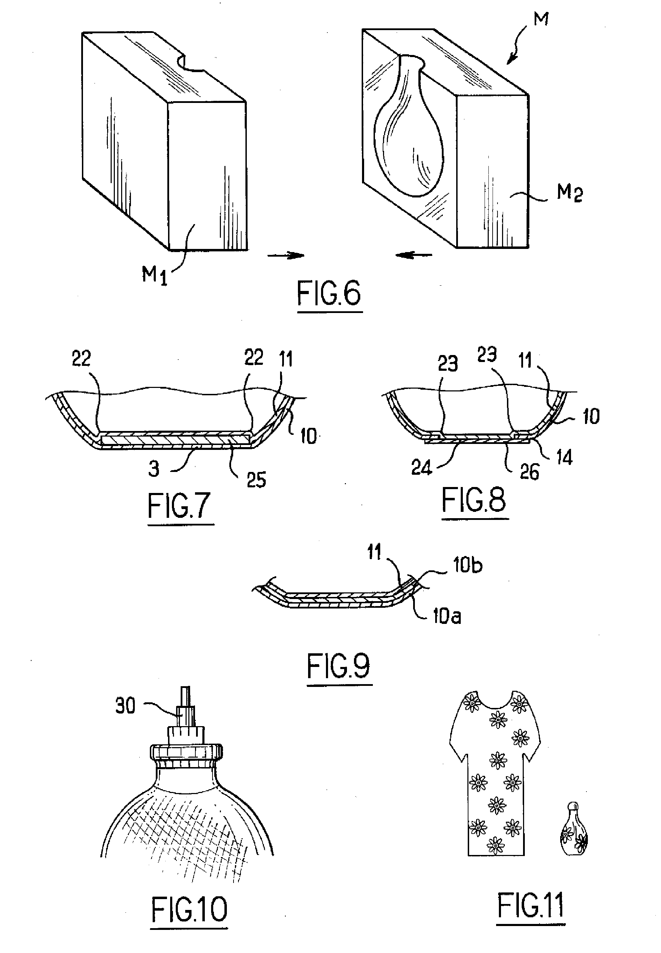

La surface extérieure 17 de la paroi intérieure 11 peut venir épouser au moins un relief 20, et la surface intérieure 18 de la paroi intérieure 11 présente au moins un relief 21 de forme sensiblement correspondante, compte tenu de la formation de la paroi 11 par soufflage. Le cas échéant, la matière de la préforme peut s'engager de manière sensible dans des ajours ou aspérités de la pièce de revêtement. A titre d'exemple, on a représenté partiellement en coupe, à la figure 5, une pièce de revêtement comportant un grillage, notamment métallique, définissant des mailles à l'intérieur desquelles la matière de la préforme s'est largement engagée. Les fils 19 de la pièce de revêtement 11 paraissent alors encastrés dans la matière de la préforme. La pièce de revêtement peut contribuer, le cas échéant, à renforcer la résistance mécanique du récipient, notamment vis-à-vis de chocs ou d'une pression interne.

Le soufflage de la préforme peut s'effectuer sans placer la pièce de revêtement 10 dans un moule, la pièce de revêtement 10 étant dans ce cas réalisée de manière à supporter la pression exercée par la préforme 15 lors du soufflage.

La pièce de revêtement 10 peut encore, en variante, être disposée à l'intérieur d'un moule M comportant au moins deux parties M₁ et M₂, lesquelles sont réunies avant le soufflage, comme illustré sur la figure 6, de manière à former une cavité de moule contre laquelle la pièce de revêtement 10 peut venir en appui lors du soufflage.

Cela peut permettre de réaliser la pièce de revêtement 10 avec une moindre résistance mécanique et/ou de contrôler davantage la forme finale du récipient.

De manière notamment à faciliter la réalisation d'un fond plat, on peut, comme illustré à la figure 7, engager un insert 25 à l'intérieur de la pièce de revêtement 10, avant d'y insérer la préforme 15.

L'utilisation d'un insert peut se faire avec ou sans moule.

La présence d'un insert peut par exemple permettre d'éviter d'avoir à utiliser une cavité de moule ayant une empreinte très précise.

L'insert 25 peut par exemple se présenter sous la forme d'un disque ayant un contour circulaire, réalisé dans une matière plastique relativement rigide ou dans un métal.

Lors du soufflage, la paroi intérieure 11 épouse sensiblement la forme de l'insert 25 et il se forme un décrochement 22 à la circonférence de celui-ci.

Dans la variante illustrée à la figure 8, la pièce de revêtement 10 comporte en partie inférieure une ouverture 24 qui est comblée par un élément extérieur 26 rapporté sur la pièce de revêtement 10 au niveau de cette ouverture 24. Cet élément extérieur 26 est par exemple collé ou soudé sur la région de la pièce de revêtement 10 bordant l'ouverture 24.

L'utilisation d'un élément extérieur peut se faire avec ou sans moule.

Un décrochement 23 se forme lors du soufflage de la paroi intérieure 11, au niveau du bord de cette ouverture 24.

La paroi intérieure 11 peut s'assembler, le cas échéant, par fusion locale de matière, avec l'élément extérieur 26. Dans l'exemple considéré, ce dernier forme un socle sur lequel le récipient peut reposer.

La pièce de revêtement 10 peut être monocouche, comme illustré sur les figures 1 à 8, ou être multicouche, comme illustrée à la figure 9.

La pièce de revêtement 10 peut notamment comporter, comme illustré sur cette figure, une couche extérieure 10a et une couche intérieure 10b, cette dernière venant au contact de la paroi intérieure 11.

La couche extérieure 10a peut par exemple comporter un flocage et la couche intérieure 10b un film supportant les poils du flocage.

L'organe de distribution 4 peut ne pas être réduit à une simple ouverture et comporter une pompe ou une valve 30, comme illustré à la figure 10.

La pièce de revêtement 10 peut être constituée par un matériau fibreux, notamment un textile. Ce dernier peut être obtenu par tissage ou tricotage. Le textile peut comporter des fibres naturelles ou synthétiques, notamment des fils de coton ou autres matières végétales. Le tissu peut encore comporter des fils de polyester ou de polyamide, voire des fils métalliques. Le matériau fibreux peut être encore un feutre, un non-tissé, une fourrure animale ou une imitation de fourrure animale. Le matériau fibreux peut encore être un revêtement de flocage.

La pièce de revêtement 10 peut comporter une impression ou avoir subi un traitement de surface. Elle peut ne pas comporter de fibres, mais des particules permettant de conférer une texture rugueuse, par exemple des particules minérales noyées dans un film en matière plastique. Elle peut être également réalisée dans un cuir ou un simili cuir.

La paroi intérieure 11 peut être dépourvue de fibres et être constituée par une matière thermoplastique, par exemple une polyoléfine, notamment du PE ou PP. L'épaisseur de la paroi intérieure 11 est par exemple comprise entre 0,5 et 2,5 mm, par exemple de l'ordre de 0,5 à 1,5 mm.

Un récipient réalisé conformément à l'invention peut être associé à un objet, par exemple un vêtement, le tissu dans lequel le vêtement est réalisé étant alors le même que celui constituant la pièce de revêtement 10, comme illustré à la figure 11.

Quelle que soit sa nature, la pièce de revêtement peut, le cas échéant, être induite sur sa surface intérieure d'un adhésif destiné à améliorer l'adhérence sur la matière constituant la préforme.

Bien entendu, l'invention n'est pas limitée aux exemples de réalisation qui viennent d'être donnés.

En particulier, le récipient peut présenter une forme différente que celle illustrée sur le dessin.

La préforme peut être déformée autrement que par soufflage d'un gaz.

La préforme peut notamment être déformée par soufflage ou injection d'un liquide ou d'un produit pulvérulent.

La préforme peut encore être déformée en disposant à l'intérieur un matériau qui s'expense, à cause d'une réaction chimique, d'un changement d'état ou d'une dilatation. Le cas échéant, ce matériau peut être enlevé après son expansion en étant dissout par un solvant, par exemple.

Dans toute la description, y compris les revendications, l'expression « comportant un » doit être comprise comme étant synonyme de « comportant au moins un », sauf si le contraire est spécifié.

## Revendications

1. Procédé de fabrication d'un récipient (1) destiné à contenir un produit, notamment un produit cosmétique, **caractérisé par le fait qu'**il comporte les étapes suivantes :
- disposer une préforme (15) au moins partiellement à l'intérieur d'une pièce de revêtement (10) creuse, présentant une surface extérieure (14) fibreuse ou ayant une texture non lisse, cette préforme (15) présentant une ouverture (6) unique,
- déformer en exerçant une pression interne la préforme (15) afin de lui faire épouser sensiblement la forme d'une surface intérieure (16) de la pièce de revêtement (10), la pièce de revêtement (10) n'étant pas disposée dans un moule lors de l'étape de déformation de la préforme.

2. Procédé selon la revendication 1, **caractérisé par le fait que** la préforme est déformée par soufflage.

3. Procédé selon l'une des revendications précédentes, **caractérisé par le fait que** la pièce de revêtement (10) comporte une ouverture (7) unique.

4. Procédé selon l'une quelconque des revendications précédentes, **caractérisé par le fait qu'**il comporte l'étape consistant à réaliser la préforme (15) par injection.

5. Procédé selon l'une quelconque des revendications 1 à 3, **caractérisé par le fait qu'**il comporte l'étape consistant à réaliser la préforme (15) par extrusion.

6. Procédé selon l'une quelconque des revendications précédentes, **caractérisé par le fait que** la pièce de revêtement (10) est réalisée dans un matériau choisi parmi les suivants : tissé, non-tissé, notamment feutre, cuir ou simili cuir, fourrure ou imitation de fourrure, flocage, papier, métal, notamment sous forme de tissu ou de grillage.

7. Procédé selon l'une quelconque des revendications 1 à 6, **caractérisé par le fait que** la préforme (15) est réalisée en matière thermoplastique, notamment dans une polyoléfine telle que du PE ou PP.

8. Procédé selon l'une quelconque des revendications précédentes, **caractérisé par le fait que** la pièce de revêtement (10) comporte au moins une couture (12a ; 12b).

9. Procédé selon l'une quelconque des revendications précédentes, **caractérisé par le fait qu'**il comporte l'étape consistant à disposer à l'intérieur de la pièce de revêtement (10) un insert (25), notamment un insert (25) destiné à conférer au récipient un fond plat.

10. Procédé selon l'une quelconque des revendications précédentes, **caractérisé par le fait que** la préforme (15) comporte un col fileté (5).

11. Récipient (1) destiné à contenir un produit cosmétique, **caractérisé par le fait qu'**il comporte :
- une paroi intérieure (11) présentant une surface intérieure (18) destinée à venir au contact du produit, et
- une pièce de revêtement (10) couvrant au moins une partie de la paroi intérieure (11), et présentant une surface extérieure fibreuse ou ayant une texture non lisse, la paroi intérieure (11) étant réalisée par déformation sous l'effet d'une pression interne, notamment par soufflage, d'une préforme (15) engagée au moins partiellement à l'intérieur de la pièce de revêtement, la pièce de revêtement n'ayant pas été disposée dans un moule lors de l'étape de déformation de la préforme.

12. Récipient selon la revendication 11, **caractérisé par le fait que** la surface intérieure (18) de la paroi intérieure (11) comporte au moins un relief (21) ayant une forme épousant sensiblement celle d'un relief de la pièce de revêtement (10).

13. Récipient selon l'une quelconque des deux revendications immédiatement précédentes, **caractérisé par le fait que** la pièce de revêtement comporte au moins une couture (12a ; 12b).

14. Récipient selon l'une quelconque des revendications 11 à 13, **caractérisé par le fait que** la pièce de revêtement comporte des ajours à l'intérieur desquels la paroi intérieure (11) s'étend au moins partiellement, notamment des ajours définis par des mailles d'un tissu ou d'un grillage.
